# EUROPÄISCHE PATENTSCHRIFT

(11) **EP 0 914 748 B1**
(45) Veröffentlichungstag und Bekanntmachung des Hinweises auf die Patenterteilung: **19.11.2003**
(21) Anmeldenummer: 97936559.0
(22) Anmeldetag: 25.07.1997
(51) Int. Cl.: H04Q 7/24, H04Q 7/38, H04Q 7/26

(54) **VERFAHREN UND SYSTEM ZUR LEITWEGLENKUNG**
PROCESS AND SYSTEM FOR AUTOMATIC ROUTING
PROCEDE ET SYSTEME D'ACHEMINEMENT AUTOMATIQUE

(30) Priorität: 26.07.1996 DE 19630399
(43) Veröffentlichungstag der Anmeldung: 12.05.1999
(73) Patentinhaber: SIEMENS AKTIENGESELLSCHAFT, 80333 München (DE)
(72) Erfinder: LECHNER, Gerhard, A-1040 Wien (AT); RAU, Helmut, D-82110 Germering (DE); SCHÖTTLE, Eckard, D-82152 Krailing (DE); WEILER, Dirk, D-82110 Germering (DE)
(86) Internationale Anmeldenummer: DE9701576
(87) Internationale Veröffentlichungsnummer: WO98005178

(56) Entgegenhaltungen:
- EP-A- 0 462 727
- WO-A-96/21330
- WO-A-96/22000

## Beschreibung

Die Erfindung betrifft ein Verfahren und ein System zur Leitweglenkung beim Verbindungsaufbau für Anrufe zwischen einem ersten Teilnehmer und einem zweiten Teilnehmer, der sich zwischen Versorgungsbereichen von Mobilvermittlungsstellen eines öffentlichen Mobilfunknetzes und Bereichen von Nebenstelleneinrichtungen eines oder mehrerer privater Netze bewegt.

Ein öffentliches Mobilfunknetz, wie beispielsweise das internationale Mobilfunknetz nach dem GSM-Standard (Global System for Mobile Communication), stellt bekanntlich mobilen Teilnehmern Fernsprechdienste, Datendienste und zusätzliche Dienste, die beispielsweise auch aus dem ISDN-Netz (Integrated Services Digital Network) bekannt sind, zur Verfügung und läßt sich mit weiteren Netzen, beispielsweise dem öffentlichen Fernsprechnetz (PSTN) oder dem ISDN-Netz oder einem anderen leitungsgebundenen Netz, verbinden. Auch Verbindungen von und zu anderen öffentlichen Mobilfunknetzen werden unterstützt. Das GSM-Mobilfunknetz ist ein digitales, aus einer großen Anzahl von Funkzellen zellular aufgebautes Funkkommunikationssystem. Dabei wird jede Funkzelle von einer Basis-Sende-Empfangsstation bedient, die die Verbindungen zu den Mobilstationen der Teilnehmer über die Luftschnittstelle jeweils herstellt. Eine oder mehrere Basis-Sende-Empfangsstationen werden von einer Basisstationssteuerung betreut.

Eine oder mehrere Basisstationssteuerungen sind jeweils an eine Mobilvermittlungsstelle angeschaltet, die für einen bestimmten Versorgungsbereich im Mobilfunknetz die vermittlungstechnischen Funktionen übernimmt. Zu den vermittlungstechnischen Funktionen gehören die Leitweglenkung, d.h. die Auswahl der Leitwege, und der Aufbau von Verbindungen zur Signalisierung und zur Anrufdurchschaltung. Darüber hinaus führt die Mobilvermittlungsstelle mobilfunkspezifische Funktionen, die sich aus der Mobilität der Teilnehmer ergeben, aus. Dazu gehört die Mobilitätsverwaltung der mobilen Teilnehmer im jeweiligen Versorgungsbereich. Der Mobilvermittlungsstelle ist eine Teilnehmerdatenbasis zugeordnet, in der Teilnehmerdaten und Aufenthaltsinformationen für die Teilnehmer, die sich in dem Versorgungsbereich aufhalten, gespeichert sind. Die Teilnehmerdatenbasis übernimmt beispielsweise Funktionen der Verbindungsbehandlung, des Verbindungsaufbaus und insbesondere der Aufenthaltsregistrierung. Für den mobilen Teilnehmer wird üblicherweise als Aufenthaltsinformation eine Aufenthaltsbereichskennung (Location Area Identity) gemäß dem GSM-Standard in die Teilnehmerdatenbasis eingetragen.

Aus der europäischen Patentanmeldung EP-0 462 727 A2 ist ein mit privaten Nebenstelleneinrichtungen gekoppeltes Mobilfunknetz bekannt, über das die Anrufverbindungen der Mobilfunkteilnehmer geroutet werden, sobald sie sich im Bereich einer der Nebenstelleneinrichtungen befinden.

Aus der internationalen Patentanmeldung WO 96/22000 ist ein mit einer privaten Nebenstelleneinrichtung gekoppeltes Kommunikationsnetz mit mobilen Endgeräten bekannt, bei dem von einer mit der Nebenstelleneinrichtung verbundenen Steuereinheit (mobility server) alle Anrufverbindungen der mobilen Endgeräte überprüft werden. Die mobilen Endgeräte können insbesondere abgehende Anrufverbindungen nur über die Nebenstelleneinrichtung initiieren.

Aus der internationalen Patentanmeldung WO 96/21330 ist ein System zur drahtlosen Kommunikation bekannt, bei dem zwischen einer Nebenstelleneinrichtung und Funkvermittlungseinrichtungen eine Steuereinheit (mobility server) angeordnet ist, die durch Interworking mit der Nebenstelleneinrichtung eine drahtlose Kommunikation zwischen mehreren Funkvermittlungseinrichtungen emuliert.

Aus dem Aufsatz "Einen Schritt näher am Personal Communicator", telcom report 18, 1995, Seiten 308-309 ist es bekannt, durch die Mobilvermittlungsstelle in einer kombinierten Betriebsart neben Mobilfunkteilnehmern auch drahtgebundene Teilnehmer, z.B. ISDN-Teilnehmer, zu bedienen, die über Nebenstelleneinrichtungen (Private Branche Exchanges) anschließbar sind. Somit entstehen Verbindungen zwischen Mobilvermittlungsstellen des öffentlichen Mobilfunknetzes und Nebenstelleneinrichtungen eines oder mehrerer privaten Netze. Im privaten Netz sind beispielsweise mehrere Standorte einer Firma oder mehrere Firmen untereinander verbunden (Corporate Network). Bei dem Zusammenwirken des privaten Netzes mit dem öffentlichen Mobilfunknetz werden derzeit die Netze nicht als gleichberechtigt behandelt, d.h. das eine Netz wird jeweils lediglich als Zugangsnetz für das andere Netz benutzt. Hinsichtlich der Leitweglenkung bei Anrufen, die Teilnehmer betreffen, die sich zwischen Mobilfunknetz und privatem Netz oder innerhalb des jeweiligen Netzes bewegen können, bedeutet dies, daß beim Verbindungsaufbau für einen Anruf die Leitweglenkung über das öffentliche Mobilfunknetz geführt werden muß, wenn Ursprungs-Nebenstelleneinrichtung, zu der der Anruf auf Grund der gewählten Rufnummer gelenkt wird, und Ziel-Nebenstelleneinrichtung, an der der angerufene Teilnehmer erreichbar ist oder für ihn ein Ersatzziel hinterlegt ist, in demselben privaten Netz liegen. Da die Nebenstelleneinrichtungen üblicherweise untereinander vernetzt sind, stellt die über das öffentliche Mobilfunknetz aufzubauende Verbindung kein optimales Verfahren zur Leitweglenkung dar.

Daher ist es Aufgabe der vorliegenden Erfindung, ein Verfahren und ein System zur optimierten Leitweglenkung zwischen Nebenstelleneinrichtungen eines privaten Netzes, unterstützt durch das öffentliche Mobilfunknetz, anzugeben.

Diese Aufgabe wird gemäß der Erfindung hinsichtlich des Verfahrens durch die Merkmale des Patentanspruchs 1 und hinsichtlich des Systems durch die Merkmale des Patentanspruchs 13 gelöst. Weiterbildungen der Erfindung sind in den Unteransprüchen angegeben.

Demnach wird im öffentlichen Mobilfunknetz zumindestens eine Identifikationsnummer zur Kennzeichnung eines privaten Netzes für den Zugriff zu einer ersten Nebenstelleneinrichtung, von der ein Anruf zu einem Teilnehmer registriert und eine Mobilteilnehmerrufnummer in das öffentliche Mobilfunknetz gesendet wurde, gespeichert. Eine Leitwegnummer wird im Mobilfunknetz auf Grund der eintreffenden Mobilteilnehmerrufnummer bereitgestellt und in Bezug auf die gespeicherte Identifikationsnummer überprüft, ob das Anrufziel im Bereich einer Nebenstelleneinrichtung desselben privaten Netzes liegt, zu dem die erste Nebenstelleneinrichtung gehört. Ist dies der Fall, werden Leitweginformationen, die das Anrufziel festlegen, nach Auslösen des Anrufs im öffentlichen Mobilfunknetz zur ersten Nebenstelleneinrichtung gesendet, die anschließend die Verbindung zum Anrufziel anhand der empfangenen Leitweginformationen im privaten Netz aufbaut.

Durch das Verfahren und das System gemäß der Erfindung unterstützt das öffentliche Mobilfunknetz eine optimale Leitweglenkung beim Verbindungsaufbau innerhalb des privaten Netzes für den Fall, daß die Ursprungs-Nebenstelleneinrichtung (Heimat-Nebenstelleneinrichtung), bei der der Anruf für den angerufenen Teilnehmer registriert wird, und die Ziel-Nebenstelleneinrichtung (Besucher-Nebenstelleneinrichtung), in der das Anrufziel liegt, wenn beispielsweise der angerufene Teilnehmer dort eingebucht oder für ihn ein Ersatzziel registriert ist, in demselben privaten Netz liegen. Es wird eine aufwendige Leitweglenkung über das öffentliche Mobilfunknetz beim Verbindungsaufbau zwischen Ursprungs-Nebenstelleneinrichtung und Ziel-Nebenstelleneinrichtung vermieden. Der Vorteil des erfindungsgemäßen Verfahrens bzw. Systems liegt auch darin, daß der auf Grund einer Mobilteilnehmerrufnummer an das öffentliche Mobilfunknetz weitergeleitete Anruf über die netzübergreifende Schnittstelle zwischen privatem Netz und Mobilfunknetz wieder ausgelöst wird, bevor die Leitweglenkung innerhalb des privaten Netzes von der Ursprungs-Nebenstelleneinrichtung zur Ziel-Nebenstelleneinrichtung anhand der mitgeteilten Leitweginformationen aufgebaut wird. Die Folge ist ein geringerer Zeitbedarf beim Verbindungsaufbau auf Grund einer optimierten Leitweglenkung, sowie eine geringere Belastung der von der Leitweglenkung im öffentlichen Mobilfunknetz betroffenen Netzeinrichtungen.

Gemäß einer Weiterbildung der Erfindung wird eine Leitwegnummer im öffentlichen Mobilfunknetz bereitgestellt, die zumindestens eine Identifikationsnummer zur Kennzeichnung des privaten Netzes, in dem die Nebenstelleneinrichtung des Anrufziels liegt, aufweist. Von Vorteil ist, wenn die Leitwegnummer zusätzlich eine Identifikationsnummer zur Kennzeichnung der Nebenstelleneinrichtung des Anrufziels und eine Identifikationsnummer zur Kennzeichnung des Anschlußports der Nebenstelleneinrichtung enthält.

Von Vorteil ist auch, wenn die zum Verbindungsaufbau zwischen den Nebenstelleneinrichtungen desselben privaten Netzes verwendeten Leitweginformationen eine Identifikationsnummer zur Kennzeichnung der Nebenstelleneinrichtung des Anrufziels und eine Identifikationsnummer zur Kennzeichnung des Anschlußports der Nebenstelleneinrichtung aufweisen.

Gemäß einer anderen Weiterbildung der Erfindung wird eine Aufenthaltsinformation, die angibt, wie der Teilnehmer im Bereich einer Nebenstelleneinrichtung des privaten Netzes erreichbar ist, gespeichert und als Leitwegnummer für einen Vergleich mit der gespeicherten Identifikationsnummer hinsichtlich Identität des privaten Netzes für die erste Nebenstelleneinrichtung und für die den angerufenen Teilnehmer registrierende Nebenstelleneinrichtung verwendet wird.

Gemäß einer alternativen Weiterbildung der Erfindung wird die Leitwegnummer auf Grund einer Anrufumlenkung für den Vergleich mit der gespeicherten Identifikationsnummer hinsichtlich Identität des privaten Netzes für die erste Nebenstelleneinrichtung und für die Nebenstelleneinrichtung des Anrufziels verwendet.

Gemäß alternativer Weiterbildungen der Erfindung wird der Vergleich der Leitwegnummer mit der Identifikationsnummer von einer Dienstesteuerungseinheit eines Intelligenten Netzes durchgeführt, die durch Anschaltung an zumindestens eine Mobilvermittlungsstelle in das öffentliche Mobilfunknetz eingebunden ist, oder von einer den Zugriff zur ersten Nebenstelleneinrichtung registrierenden Mobilvermittlungsstelle durchgeführt. Ergibt der Vergleich eine Identität des privaten Netzes für die Nebenstelleneinrichtungen, werden die Leitweginformationen von der Mobilvermittlungsstelle zur Nebenstelleneinrichtung über die netzübergreifende Schnittstelle ausgesendet.

Die Erfindung wird anhand eines in Figuren dargestellten Ausführungsbeispiels näher erläutert. Im einzelnen zeigen
- Figur 1: in einem Blockschaltbild die Konfiguration eines privaten Netzes und eines öffentlichen Mobilfunknetzes mit mobilen Teilnehmern, die sich mit ihren Funkteilnehmerstationen zwischen den Netzen und/oder innerhalb der Netze bewegen,
- Figur 2: in einem Blockschaltbild den Ablauf zur Leitweglenkung für einen'im privaten Netz für einen angerufenen Teilnehmer registrierten Anruf, der in das öffentliche Mobilfunknetz gelenkt wird,
- Figur 3: in einem Blockschaltbild den Ablauf zur Leitweglenkung beim Verbindungsaufbau zu einem Anrufziel, das in demselben privaten Netz liegt,
- Figur 4: in einem Blockschaltbild die Konfiguration gemäß Figur 1 mit einer zusätzlich in das Mobilfunknetz eingebundenen Dienstesteuerungseinheit eines Intelligenten Netzes,
- Figur 5: in einem Blockschaltbild den Ablauf zur Leitweglenkung für einen im privaten Netz für einen angerufenen Teilnehmer registrierten Anruf, der in das öffentliche Mobilfunknetz mit Dienstesteuerungseinheit gelenkt wird und
- Figur 6: in einem Blockschaltbild den Ablauf zur Leitweglenkung beim Verbindungsaufbau zu einem Anrufziel, das in demselben privaten Netz liegt, unter Einbeziehung der Dienstesteuerungseinheit.

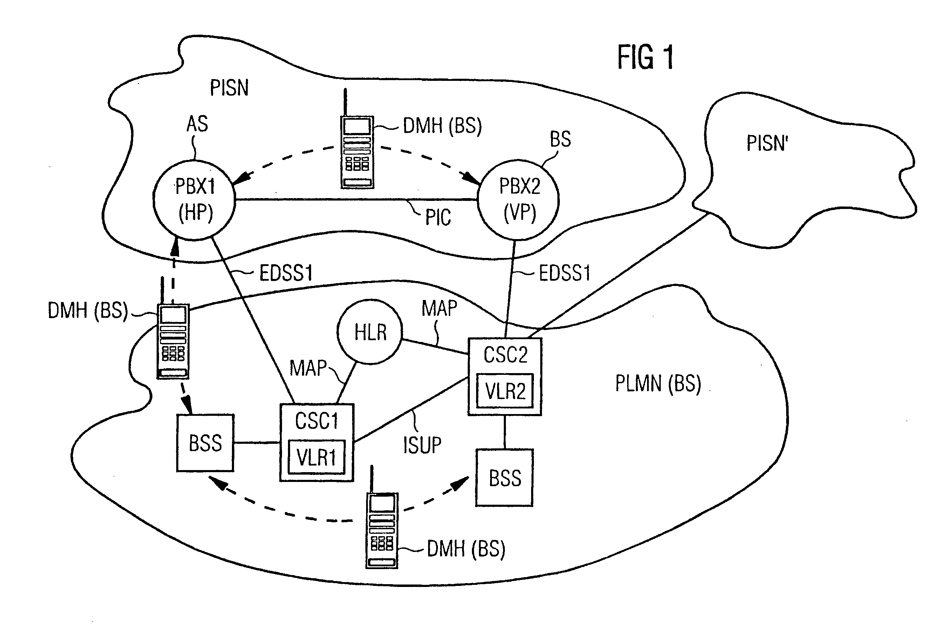

Figur 1 zeigt in einem Blockschaltbild die Struktur privater Netze PISN, PISN' und eines öffentlichen Mobilfunknetzes PLMN, an das über Schnittstellen die privaten Netze PISN, PISN' zur Unterstützung der Mobilität von Teilnehmern, die sich zwischen den Netzen und/oder innerhalb des jeweiligen Netzes mit ihren Funkteilnehmerstationen DMH bewegen können, angeschlossen sind. Das öffentliche Mobilfunknetz PLMN ist beispielsweise ein digitales zellular aufgebautes Funkkommunikationssystem nach dem GSM-Standard, das aus einem funktechnischen Teilsystem, einem vermittlungstechnischen Teilsystem und einem Bedienungs- und Wartungs-Teilsystem besteht. Das funktechnische Teilsystem weist ein Basisstationssystem BSS mit Basis-Sende-Empfangsstationen, die über die Funkzellen des gesamten Versorgungsbereichs verteilt sind, mehrere Basisstationssteuerungen sowie Teilnehmerstationen, die im vorliegenden Beispiel gemäß Figur 1 als kombinierte Funkteilnehmerstationen DMH - Dual-Mode-Funkteilnehmerstationen - ausgebildet sind. Dabei ermöglicht die Funkteilnehmerstation DMH eine drahtlose Anbindung eines mobilen Teilnehmers BS über die Luftschnittstelle beispielsweise an ein reichweitenbegrenztes Schnurlossystem, beispielsweise das standardisierte DECT-Schnurlossystem (Digital Enhanced Cordless Telecommunication), und an ein öffentliches Funkkommunikationssystem, z.B. das international standardisierte GSM-Mobilkommunikationssystem.

Der mobile Teilnehmer BS ist durch seine Dual-Mode-Funkteilnehmerstation DMH beispielsweise am Arbeitsplatz über das DECT-Schnurlossystem erreichbar, wenn er automatisch an einem Standort des privaten Netzes PISN (private integrated service network) im Bereich einer Nebenstelleneinrichtung PBX1, PBX2 (private integrated service network exchange) eingebucht ist, und beispielsweise auf Dienstreisen über das öffentliche GSM-Mobilkommunikationssystem erreichbar, wenn er im Versorgungsbereich einer Mobilvermittlungsstelle CSC1, CSC2 registriert ist. Die Basisstationssteuerungen des Basisstationssystems BSS übernehmen die Übertragungs- und Steuerfunktionen bei der Funkversorgung und verbinden das Basisstationssystem mit dem vermittlungstechnischen Teilsystem, das u.a. mehrere Mobilvermittlungsstellen CSC1, CSC2... und Teilnehmerdatenbasen VLR1, VLR2, HLR... aufweist. Im vorliegenden Beispiel sind zwei Mobilvermittlungsstellen CSC1 und CSC2 dargestellt, von denen die Verbindungssteuerungsfunktionen bereitgestellt werden. Dabei übernehmen die Mobilvermittlungsstellen CSC1 und CSC2 vermittlungstechnische Aufgaben, wie Auswahl der Leitwege und Aufbau von Nutz- und Zeichengabeverbindungen, sowie mobilfunkspezifische Funktionen wie beispielsweise die Mobilitätsverwaltung der Mobilteilnehmer.

Die Teilnehmerdatenbasen im Mobilfunknetz bestehen aus einem oder mehreren Heimatregistern HLR und aus einer Mehrzahl von Besucherregistern VLR1, VLR2.... Jeder Mobilvermittlungsstelle CSC1, CSC2 ist ein dezentral angeordnetes Besucherregister VLR1, VLR2 zugeordnet, um die im Versorgungsbereich der Mobilvermittlungsstelle sich aufhaltenden Teilnehmer zu registrieren und zu bedienen. Zur Aufenthaltsregistrierung werden Teilnehmerdaten und Aufenthaltsinformationen für die mobilen Teilnehmer in den Besucherregistern VLR als semipermanente Daten, die nur für die Dauer des Aufenthalts im jeweiligen Versorgungsbereich notwendig sind, gespeichert. Üblicherweise wird eine Aufenthaltsbereichskennung (Location Area Identity) gemäß dem GSM-Standard für die im GSM-Mobilfunknetz sich bewegenden Teilnehmer als Aufenthaltsinformation hinterlegt, um deren Teilnehmerdaten für die Verbindungsbehandlung bereitzustellen. Das Heimatregister HLR dient als zentrale Teilnehmerdatenbasis, in der alle für den mobilen Teilnehmer relevanten Daten registriert sind. Darin sind unter anderem auch die für den mobilen Teilnehmer jeweils nutzbaren Dienste eingetragen.

Für den Verbindungsaufbau und die Anrufbehandlung im Mobilfunknetz PLMN werden Zeichengabefunktionen zwischen den Einrichtungen des vermittlungstechnischen Teilsystems bzw. zwischen den Einrichtungen des vermittlungstechnischen Teilsystems und des Basisstationssystems BSS eingesetzt. Dabei werden Verbindungen, die zwischen einem mobilen Teilnehmer und einem anderen Teilnehmer in einem leitungsgebundenen Fernsprechnetz (PSTN) oder in einem anderen leitungsgebundenen Festetz (z.B. ISDN) oder einem mobilen Teilnehmer des eigenen oder eines anderen Mobilfunknetzes verlaufen, gemäß dem Zentralen Zeichengabesystem No. 7 (CCS7) behandelt. Das Zentrale Zeichengabesystem CCS7 verfügt über einen mobilfunkspezifischen Anwenderteil MAP, der die Kommunikation zwischen den Mobilfunknetzeinrichtungen regelt, und über einen ISDN-Benutzerteil ISUP, der die Zeichengabefunktionen an der Schnittstelle des Mobilfunknetzes PLMN zum Festnetz ISDN bereitstellt. Während die MAP-Funktionen in erster Linie den Informationsaustausch zwischen den Teilnehmerdatenbasen VLR1, VLR2, HLR betrifft, wird der Benutzerteil ISUP auch auf den Verbindungsleitungen zwischen den Mobilvermittlungsstellen CSC1, CSC2 verwendet. Die ISUP-Funktionen werden beispielsweise bei einem Handover nach der Verbindungsübergabe von einer ersten Mobilvermittlungsstelle zu einer zweiten Mobilvermittlungsstelle benötigt.

Neben dem Zentralen Zeichengabesystem No. 7 wird ein weiteres Zeichengabesystem EDSS1 eingesetzt, das die Kommunikation an der Schnittstelle zwischen privatem Netz PISN mit den Nebenstelleneinrichtungen PBX1, PBX2 und dem öffentlichen Mobilfunknetz PLMN mit den Mobilvermittlungsstellen CSC1, CSC2 ermöglicht. Es kann auch ein drahtgebundener ISDN-Teilnehmer durch einen Multiplexanschluß oder durch einen ISDN-Basisanschluß mit der Nebenstelleneinrichtung PBX1 bzw. PBX2 und von dort direkt mit der Mobilvermittlungsstelle CSC1 bzw. CSC2 verbunden sein. Mobile als auch drahtgebundene Teilnehmerstationen sind unabhängig vom jeweiligen Standard auf der Luftschnittstelle - beispielsweise GSM, DECT, CDMA (Code Division Multiple Access) - an die Mobilvermittlungsstelle CSC1 bzw. CSC2 anschließbar. Die Nebenstelleneinrichtungen PBX1 und PBX2 des privaten Netzes PISN sind beispielsweise an die Mobilvermittlungsstellen CSC1 und CSC2 des öffentlichen Mobilfunknetzes PLMN über das Zeichengabesystem EDSS1 erreichbar. Dabei ist es auch möglich, an eine Mobilvermittlungsstelle mehrere Nebenstelleneinrichtungen anzuschalten. Es sei angenommen, daß die Nebenstelleneinrichtung PBX1 an einem ersten Standort einer Firma und die Nebenstelleneinrichtung PBX2 an einem zweiten Standort einer Firma liegt und miteinander über eine Verbindung PIC, die beipielsweise eine leitungsgebundene Verbindung ist, innerhalb des privaten Firmennetzes vernetzt sind. An das Mobilfunknetz PLMN ist ein weiteres privates Netz PISN' anschließbar, das beispielsweise eine ähnliche oder identische Struktur wie das private Netz PISN aufweist.

Die mobilen Teilnehmer BS sind über ihre kombinierten Funkteilnehmerstationen DMH im privaten Netz PISN über eine DECT-Basisstation und im öffentlichen Mobilfunknetz PLMN über die GSM-Basis-Sende-Empfangsstation erreichbar. Die mobilen Teilnehmer bewegen sich mit ihren Funkteilnehmerstationen DMH zwischen den Versorgungsbereichen der Mobilvermittlungsstellen und den Bereichen der Nebenstelleneinrichtungen. Außer den beiden in Figur 1 dargestellten Nebenstelleneinrichtungen PBX1 und PBX2 können selbstverständlich weitere Nebenstelleneinrichtungen im privaten Netz PISN, das im vorliegenden Beispiel mit Nebenstelleneinrichtungen, die den DECT-Standard unterstützen, ausgestattet ist, vorhanden sein. Für das vorliegende Beispiel sei angenommen, daß die Nebenstelleneinrichtung PBX1 die Heimat-Nebenstelleneinrichtung HP, zu der die Anrufe für den mobilen Teilnehmer BS im privaten Netz auf Grund seiner Rufnummer gelenkt werden, und die Nebenstelleneinrichtung PBX2 die Besucher-Nebenstelleneinrichtung VP, in deren Bereich das Anrufziel liegt, bilden. Das Anrufziel im privaten Netz ist dabei z.B. durch eine vom Teilnehmer BS aktivierte Anrufumlenkung festgelegt oder an einer den aktuellen Aufenthaltsort kennzeichnenden Aufenthaltsinformation, die im öffentlichen Mobilfunknetz gespeichert ist, erkennbar. Die Anrufumlenkung kann beispielsweise über eine dem Teilnehmer BS zur Verfügung stehende drahtgebundene Teilnehmerstation eingegeben werden. Das Anrufziel kann z.B. eine Anrufeinrichtung (mail box) oder ein Zielteilnehmer, z.B. Sekretärin, sein, die bzw. der an der Nebenstelleneinrichtung PBX2 über eine drahtgebundene Teilnehmerstation oder über eine Funkteilnehmerstation, z.B. DECT-Station, erreichbar ist.

Der Anruf wird von einem A-Teilnehmer AS eines drahtgebundenen privaten oder öffentlichen Netzes oder eines Mobilfunknetzes durch Wahl einer dem angerufenen Teilnehmer BS zugehörigen Rufnummer initiiert, anhand der eine Verbindung zu der Nebenstelleneinrichtung PBX1 (Heimat- Nebenstelleneinrichtung HP) aufgebaut wird. Die Rufnummer ist die Teilnehmerrufnummer des B-Teilnehmers BS, dessen Anrufziel im Bereich der Nebenstelleneinrichtung PBX2 (Besucher-Nebenstelleneinrichtung VP) liegt. Der angerufene Teilnehmer BS ist entweder in demselben privaten Netz PISN, beispielsweise an einem anderen Firmenstandort, in der Nebenstelleneinrichtung PBX2 eingebucht oder eine Anrufumlenkung dorthin aktiviert. Als Alternative zur Funkteilnehmerstation DMH kann der mobile Teilnehmer auch übliche GSM-Mobilstationen zum Empfang und zum Aussenden der Anrufe im GSM-Mobilkommunikationsnetz sowie drahtgebundene Teilnehmerstationen zum Empfang und zum Aussenden der Anrufe im privaten Netz verwenden. In dem zuletzt genannten Fall buchen sich die mobilen Teilnehmer an den drahtgebundenen Anschlüssen der Nebenstelleneinrichtungen PBX1 und PBX2 des privaten Netzes PISN manuell ein. Über das Zeichengabesystem EDSS1 melden die Nebenstelleneinrichtungen in einer Nachricht an die Mobilvermittlungsstellen, sobald ein Zugriff auf eine Nebenstelleneinrichtung erfolgt ist.

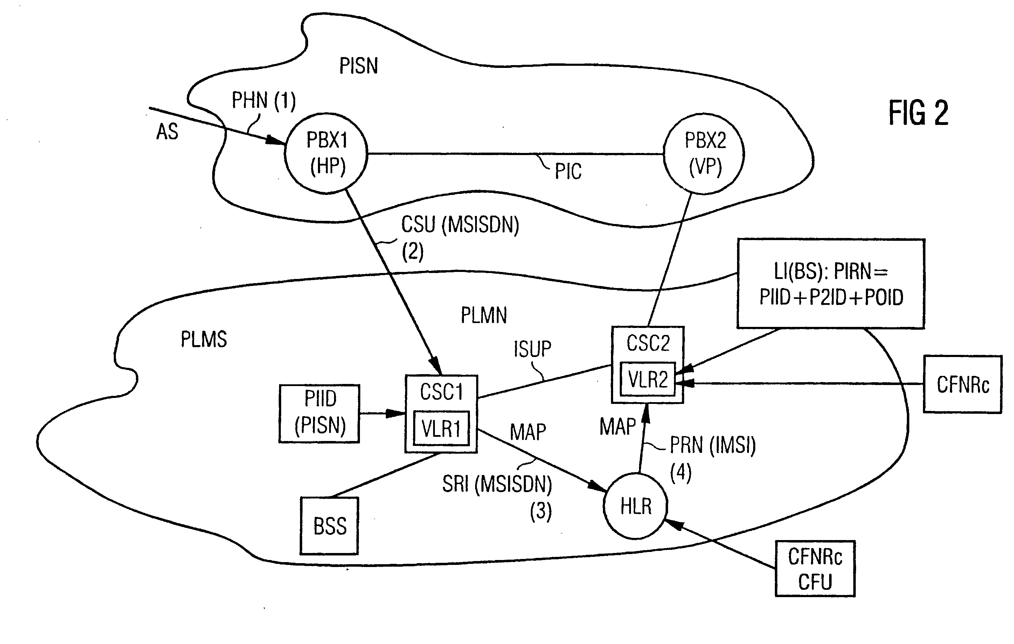

Figur 2 zeigt in einem Blockschaltbild den Ablauf zur Leitweglenkung für einen Anruf, der vom Teilnehmer AS initiiert und auf Grund der gewählten Rufnummer PHN zur Nebenstelleneinrichtung PBX1 im privaten Netz PISN gelangt (1). Die Rufnummer PHN identifiziert die für den Zielteilnehmer BS zuständige Heimat-Nebenstelleneinrichtung HP, von der er normalerweise bedient wird. Befindet sich der Zielteilnehmer gerade nicht in deren Bereich, erkennbar an einem erfolglosen Funkruf (paging) gemäß dem DECT-Verfahren oder an einer manuell vom Teilnehmer BS an einer drahtgebundenen Teilnehmerstation aktivierten Anrufumlenkung, wird die Rufnummer PHN durch eine Mobilteilnehmerrufnummer MSISDN als neues Anrufziel ersetzt. Auf Grund der Mobilteilnehmerrufnummer MSISDN wird eine Verbindung zum öffentlichen Mobilfunknetz PLMN aufgebaut. Der Verbindungsaufbau vom privaten Netz PISN zum öffentlichen Mobilfunknetz PLMN erfolgt über die Schnittstelle zwischen der Nebenstelleneinrichtung PBX1 und der Mobilvermittlungsstelle CSC1, sodaß eine Nachricht CSU (Call Setup) mit der Mobilteilnehmerrufnummer MSISDN als Nachrichteninhalt übertragen wird (2). Die Mobilvermittlungsstelle CSC1 speichert für den Zugriff zur Nebenstelleneinrichtung PBX1 eine Identifikationsnummer PIID zur Kennzeichnung des privaten Netzes PISN, in dem die den Anruf registrierende Nebenstelleneinrichtung PBX1 liegt.

Von dem mit der Mobilvermittlungsstelle CSC1 verknüpften Besucherregister VLR1 wird über den mobilspezifischen Anwenderteil MAP das Heimatregister HLR nach dem Aufenthaltsbereich des Zielteilnehmers befragt. Zu diesem Zweck wird in einer Nachricht SRI (Send Routing Info) die Mobilteilnehmerrufnummer MSISDN zum Heimatregister HLR übertragen (3). Im Heimatregister HLR sind alle Teilehmerdaten der mobilen Teilnehmer gespeichert, worunter auch die Adresse des Besucherregisters, in dessen Bereich der Zielteilnehmer sich gerade aufhält, fällt. Darüber hinaus kann für den an der Mobilteilnehmerrufnummer MSISDN im Netz PLMN erkennbaren Teilnehmer BS eine unbedingte Anrufumlenkung CFU (Call Forwarding Unconditional) oder eine Anrufumlenkung CFNRc (Call Forwarding on mobile subscriber Not Reachable) bei nicht erreichbarem Teilnehmer im Heimatregister eingetragen sein. Außer bei der unbedingten Anrufumlenkung CFU, die eine sofortige Reaktion durch das Heimatregister HLR nach sich zieht - wie an nachfolgender Stelle beschrieben - , fordert das Heimatregister HLR zunächst in einer Nachricht PRN (Provide Roaming Number), die eine im Heimatregister HLR gespeicherte internationale Teilnehmerkennung IMSI (International Mobile Subscriber Identity) enthält, vom Besucherregister VLR2 eine Wegenummer an (4). Die Nachricht PRN wird dabei gemäß dem mobilfunkspezifischen Anwenderteil MAP zwischen dem Heimatregister HLR und dem Besucherregister VLR2 übertragen.

Befindet sich der angerufene Teilnehmer BS aktuell im Versorgungsbereich einer Mobilvermittlungsstelle, das heißt im Funkversorgungsbereich des öffentlichen Mobilfunknetzes, ist für ihn eine Aufenthaltsbereichskennung (Location Area Identity) im Besucherregister gespeichert, während bei Aufenthalt des angerufenen Teilnehmers BS im Bereich einer Nebenstelleneinrichtung des privaten Netzes anstelle dieser Aufenthaltsbereichskennung eine andere Aufenthaltsinformation im Besucherregister eingetragen ist. Für den ersten zu betrachtenden Fall ist die Anrufumlenkung CFNRc mit einer Information, daß das Anrufziel der Anrufumlenkung im privaten Netz PISN liegt, im Besucherregister VLR2 eingetragen. Für den zweiten zu betrachtenden Fall ist als Aufenthaltsinformation LI für den Teilnehmer BS eine Leitwegnummer PIRN gespeichert, die angibt, wie der B-Teilnehmer über die Nebenstelleneinrichtung PBX2, in der er momentan eingebucht ist, im privaten Netz PISN erreicht werden kann. Die im Besucherregister VLR2 eingetragene Leitwegnummer PIRN besteht vorzugsweise aus einer Rufnummer, die eine Identifikationsnummer PIID zur Kennzeichnung des privaten Netzes PISN, eine Identifikationsnummer P2ID zur Kennzeichnung der Nebenstelleneinrichtung PBX2 des Anrufziels und eine Identifikationsnummer POID zur Kennzeichnung des Anschlußports der Nebenstelleneinrichtung PBX2, an dem der B-Teilnehmer angeschlossen ist, aufweist. Zumindestens die Identifikationsnummer PIID zur Kennzeichnung des privaten Netzes PISN, vorteilhafterweise ergänzt durch die Identifikationsnummer P2ID zur Kennzeichnung der Nebenstelleneinrichtung PBX2 des Anrufziels, ist erforderlich.

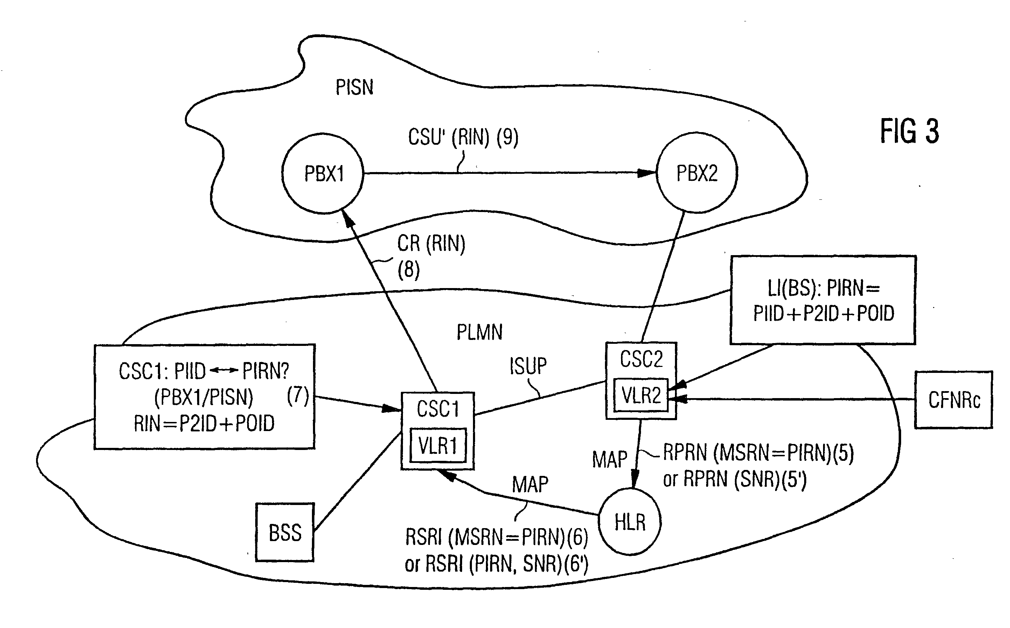

Figur 3 zeigt in einem Blockschaltbild den Ablauf zur Leitweglenkung vom öffentlichen Mobilfunknetz PLMN zurück in das private Netz PISN, in dem eine direkte Verbindung zwischen der Nebenstelleneinrichtung PBX1 und der Nebenstelleneinrichtung PBX2 aufgebaut wird. Von dem Besucherregister VLR2 wird auf Grund der für den B-Teilnehmer eingetragenen Aufenthaltsinformation LI oder auf Grund der für den B-Teilnehmer eingetragenen Anrufumlenkung CFNRc eine Nachricht RPRN (Result Provide Roaming Number) als Antwort auf die Anforderung des Heimatregisters HLR übertragen. Im ersten Fall enthält die Nachricht RPRN die Leitwegnummer PIRN als Wegenummer MSRN - gemäß dem mobilfunkspezifischen Anwenderteil MAP - (5), während im zweiten Fall eine Information SNR (Subscriber Not Reachable), die die Nichterreichbarkeit des Teilnehmers signalisiert, übertragen wird (5'). Dies ist zuvor über die für den Teilnehmer BS zuständige Basis-Sende/Empfangsstation ermittelt worden, wenn sich z.B. die Funkteilnehmerstation des Teilnehmers BS im ausgeschaltetem Zustand befindet (detach status). Das Heimatregister HLR sendet als Antwort auf die Anforderung zur Bestimmung des aktuellen Aufenthaltsbereichs des angerufenen Teilnehmers die Leitwegnummer PIRN als Wegenummer MSRN (Mobile Subscriber Roaming Number) in einer Nachricht RSRI (Result Send Routing Info) - gemäß dem mobilfunkspezifischen Anwenderteil MAP - zum Besucherregister VLR1 bzw. zur Mobilvermittlungsstelle CSC1 zurück (6). Bei der aktivierten Anrufumlenkung enthält die Nachricht RSRI ebenfalls die Leitwegnummer PIRN und zusätzlich die Information SNR (6'). Für den oben genannten Fall der Anrufumlenkung CFU wird vom Heimatregister HLR unmittelbar nach Erkennen dieses Telekommunikationsdienstes die Nachricht RSRI mit der Leitwegnummer PIRN und einer Information, daß das Anrufziel auf Grund der Anrufumlenkung im privaten Netz PISN liegt, erzeugt und ausgesendet.

Im Mobilfunknetz PLMN wird von der Mobilvermittlungsstelle CSC1 anhand der eingetroffenen Leitwegnummer PIRN und anhand der registrierten Identifikationsnummer PIID ermittelt, ob die den Anruf vom anrufenden Teilnehmer AS registrierende Nebenstelleneinrichtung PBX1 und die für das Anrufziel zuständige Nebenstelleneinrichtung PBX2 in demselben privaten Netz PISN angeordnet sind. Die auf Grund des Teilnehmerzugriffs zur Nebenstelleneinrichtung PBX1 in der Mobilvermittlungsstelle CSC1 gespeicherte Identifikationsnummer PIID stimmt mit der in der Leitwegnummer PIRN empfangenen Identifikationsnummer PIID überein, so daß durch den Nummernvergleich die Identität des privaten Netzes PISN für die beiden Nebenstelleneinrichtungen von der Mobilvermittlungsstelle CSC1 festgestellt wird. Nach Analyse der eingetroffenen Leitwegnummer PIRN und bei Vorliegen der Identität liefert die Mobilvermittlungsstelle CSC1 Leitweginformationen RIN, die zumindestens der Identifikationsnummer P2ID zur Kennzeichnung der Nebenstelleneinrichtung PBX2 des Anrufziels, ergänzt durch die Identifikationsnummer POID zur Kennzeichnung des zugehörigen Anschlußports besteht (7). Als Antwort auf den Beginn des Verbindungsaufbaus werden die Leitweginformationen RIN in einer Nachricht CR (Call Release) zur Nebenstelleneinrichtung PBX1 rückgesendet (8). Mit der Nachricht CR wird der in der Nebenstelleneinrichtung PBX1 für den angerufenen Teilnehmer BS registrierte und anhand der Mobilteilnehmerrufnummer (MSISDN) empfangene Anruf im öffentlichen Mobilfunknetz PLMN ausgelöst. Die Nebenstelleneinrichtung PBX1, an der der Anruf vom Teilnehmer AS registriert wurde, sendet zum Verbindungsaufbau eine Nachricht CSU' (Call Set Up) aus, die über die Leitungsverbindung zur Nebenstelleneinrichtung PBX2 des Anrufziels (9) gelangt. Der Verbindungsaufbau erfolgt auf Grund der vom Mobilfunknetz PLMN empfangenen Leitweginformationen RIN, die den Inhalt der Nachricht CSU' bilden. Somit wird die Leitweglenkung innerhalb des privaten Netzes PISN zwischen der als Heimat-Nebenstelleneinrichtung wirkenden Nebenstelleneinrichtung PBX1 und der als Besucher-Nebenstelleneinrichtung wirkenden Nebenstelleneinrichtung PBX2 verwirklicht, ohne daß die Verbindung über das öffentliche Mobilfunknetz PLMN aufgebaut und während des Anrufs aufrechterhalten werden muß. Der Anruf kann im Mobilfunknetz PLMN bereits vorzeitig wieder ausgelöst werden, sobald die Leitweginformation RIN an die vom Anruf betroffene ursprüngliche Nebenstelleneinrichtung übergeben ist, um von dort innerhalb des privaten Netzes PISN den Verbindungsaufbau zum Anrufziel, d.h. zum angerufenen B-Teilnehmer oder zu einem Ersatzziel, durchzuführen.

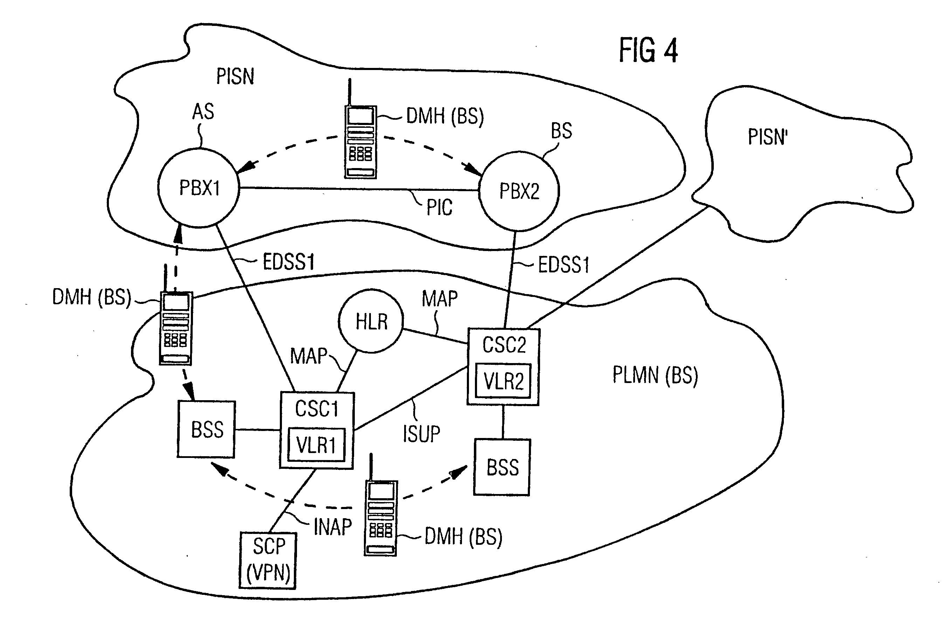

Das Blockschaltbild in Figur 4 entspricht dem Blockschaltbild gemäß Figur 1, ergänzt um eine Dienstesteuerungseinheit SCP (Service Control Point) eines Intelligenten Netzes. Die Dienstesteuerungseinheit SCP ist durch Anschaltung an zumindestens eine Mobilvermittlungsstelle, im vorliegenden Beispiel an die Mobilvermittlungsstelle CSC1, in das öffentliche Mobilfunknetz PLMN eingebunden. Die Dienstesteuerungseinheit SCP stellt eine zentrale Stelle zum Steuern der Vermittlungsund Dienstefunktionen von Dienstevermittlungseinheiten (Service Switching Points). Dabei entsprechen den Dienstevermittlungseinheiten im Intelligenten Netz die Mobilvermittlungsstellen im öffentlichen Mobilfunknetz. Die Dienstesteuerungseinheit SCP stellt eine intelligente Datenbasis dar, mit der auf flexible Art und Weise neue Dienste im Mobilfunknetz eingeführt bzw. Dienste des Intelligenten Netzes von den mobilen Teilnehmern des Mobilfunknetzes genutzt werden können. Die Dienstesteuerungseinheit SCP ist über einen netzspezifischen Anwenderteil INAP (Intelligent Network Application Part) an die jeweilige Mobilvermittlungsstelle angeschaltet. Die Information über die Identität des privaten Netzes PISN kann in der Dienstesteuerungseinheit SCP des Mobilfunknetzes PLMN gespeichert werden. Dabei ordnet die Dienstesteuerungseinheit SCP für jedes private Netz jeweils einer die Nebenstelleneinrichtung kennzeichnenden Identifikationsnummer eine Identifikationsnummer zur Kennzeichnung des jeweiligen privaten Netzes zu. Die Dienstesteuerungseinheit SCP kann dadurch qausi als Teil eines virtuellen privaten Netzes VPN (Virtuell Private Network) aufgefaßt werden, um beispielsweise aus dem Nummernbereich der im Mobilfunknetz PLMN vergebbaren Mobilteilnehmerrufnummern die Identifikationsnummer der Nebenstelleneinrichtung jeweils eindeutig in Bezug zur Identität des privaten Netzes zu setzen. Dies bedeutet, daß beispielsweise anhand der in der Mobilvermittlungsstelle CSC1 registrierten Identifikationsnummer für die Nebenstelleneinrichtung PBX1 die Dienstesteuerungseinheit SCP identifizieren kann, zu welchem privaten Netz die Nebenstelleneinrichtung PBX1 gehört.

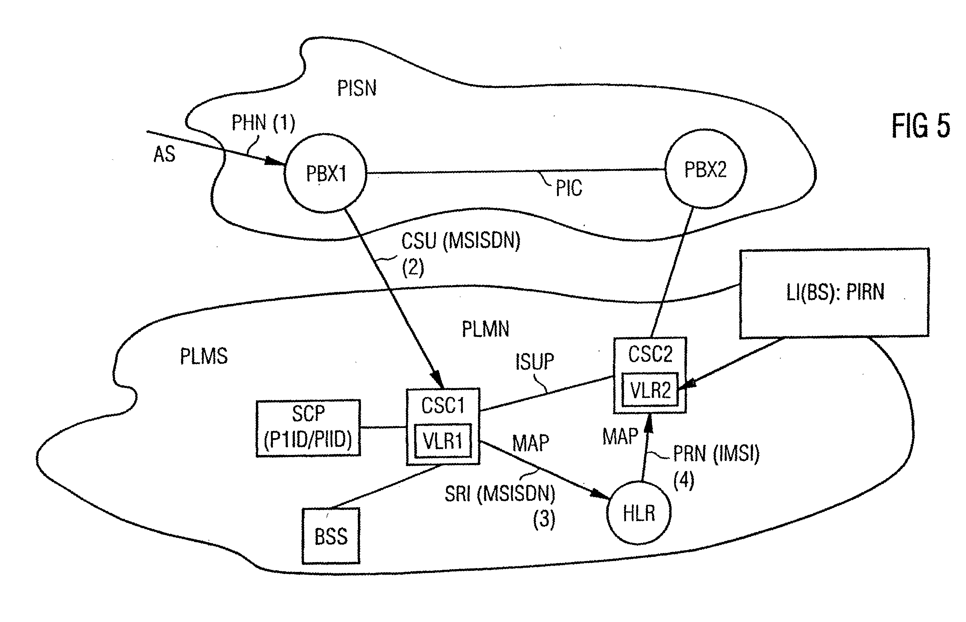

Figur 5 zeigt das Blockschaltbild für den Ablauf zur Leitweglenkung entsprechend dem Blockschaltbild gemäß Figur 2, ergänzt um die Dienstesteuerungseinheit SCP. Dabei sind die in Figur 2 dargestellten und in der zugehörigen Figurenbeschreibung behandelten Fälle der Anrufumlenkung zur Vermeidung von Wiederholungen weggelassen. Die Einbindung der Dienstesteuerungseinheit SCP ist selbstverständlich auch in diesen Fällen möglich. Die in den Verbindungsaufbau eingeschaltete Dienstesteuerungseinheit SCP ordnet der Identifikationsnummer P1ID für die Nebenstelleneinrichtung PBX1 die Identifikationsnummer PIID für das zugehörige private Netz PISN zu. Die Leitweglenkung auf Grund des in der Nebenstelleneinrichtung PBX1 registrierten Anrufs erfolgt in gleicher Weise wie in Figur 2 angegeben, bestehend aus den Verfahrensschritten (1) bis (4).

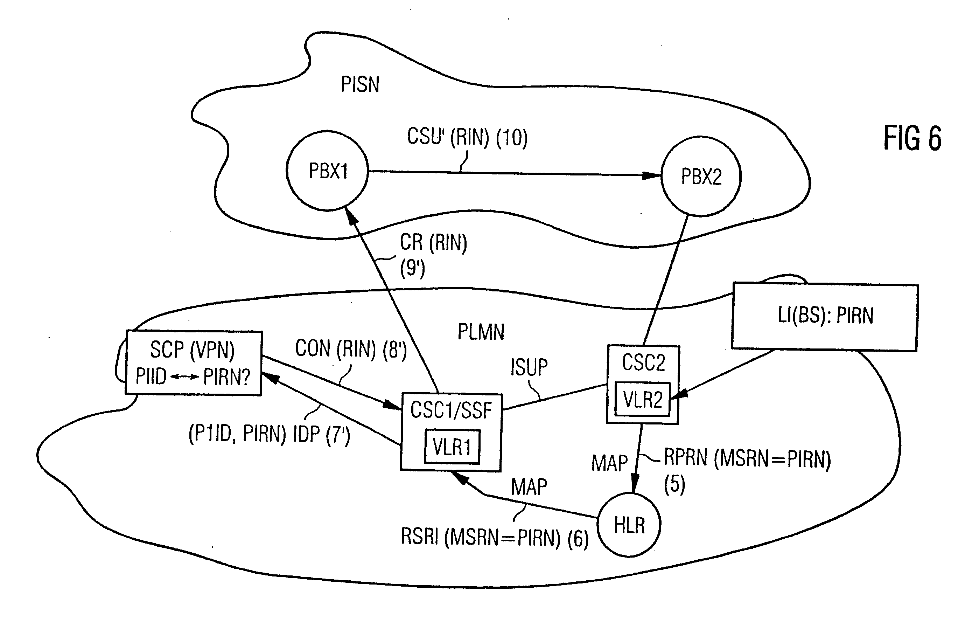

Figur 6 zeigt in einem Blockschaltbild die Fortsetzung des Ablaufs zur Leitweglenkung gemäß den Verfahrensschritten (5) und (6), die ebenfalls zu Figur 3 beschrieben sind. Die Mobilvermittlungsstelle CSC1, die mit der Dienstesteuerungseinheit SCP über den Anwenderteil INAP verbunden ist, stellt eine Dienstevermittlungsstelle SSP dar. Dabei fungiert die Dienstevermittlungseinheit SSP als eine von der Dienstesteuerungseinheit SCP gesteuerte Dienstezugangs- und Diensteausführungsstelle im Intelligenten Netz. Die Einschaltung der Dienstesteuerungseinheit SCP dient dazu, die vom Anruf im privaten Netz PISN betroffenen Nebenstelleneinrichtungen PBX1 und PBX2 auf Zugehörigkeit zu demselben Netz zu überprüfen. Die Einbindung der Dienstesteuerungseinheit SCP erfolgt derart, daß bei einem im Mobilfunknetz PLMN ankommenden Anruf mit Übersendung der Mobilteilnehmerrufnummer (MSISDN gemäß Figur 5) die Nachricht RSRI von der Mobilvermittlungsstelle CSC1 empfangen wird (6). Anschließend wird von der Dienstesteuerungseinheit SCP die von ihr zugeordnete Identifikationsnummer PIID mit der in der Nachricht RSRI empfangenen Leitwegnummer PIRN verglichen und festgestellt, daß die den Anruf zum B-Teilnehmer registrierende Nebenstelleneinrichtung PBX1 und die Nebenstelleneinrichtung PBX2 des Anrufziels in demselben privaten Netz PISN liegen. In einer Nachricht IDP (Initial Detection Point) wird von der als Dienstevermittlungseinheit SSP wirkenden Mobilvermittluungsstelle CSC1 die Identifikationsnummer P1ID der Nebenstelleneinrichtung PBX1 und die Leitwegnummer PIRN zur Dienstesteuerungseinheit SCP übertragen (7'). Nach Analyse der eingetroffenen Informationen und Überprüfung auf Identität des privaten Netzes durch Nummernvergleich sendet die Dienstesteuerungseinheit SCP die Leitweginformationen RIN in einer Nachricht CON (Connect) zur Mobilvermittlungsstelle CSC1 zurück (8'). Die Nachricht CON enthält darüber hinaus eine Information für die Mobilvermittlungsstelle CSC1, den Anruf , das heißt die Verbindung zur Nebenstelleneinrichtung PBX1, im öffentlichen Mobilfunknetz auszulösen (Release). Daher wird in identischer Art und Weise zu Figur 3 eine Nachricht CR (Call Release) mit der Leitweginformation RIN zum privaten Netz PISN rückgesendet (9'), in dem der Verbindungsaufbau durch Aussenden der Nachricht CSU' zwischen der Nebenstelleneinrichtung PBX1 und der Nebenstelleneinrichtung PBX2 anhand der Leitweginformation RIN direkt innerhalb des privaten Netzes PISN erfolgt (10).

## Patentansprüche

1. Verfahren zur Leitweglenkung beim Verbindungsaufbau für Anrufe zwischen einem ersten Teilnehmer (AS) und einem zweiten Teilnehmer (BS), bei dem
- der Anruf vom ersten Teilnehmer (AS) durch Wahl einer Rufnummer (PHN) initiiert und an den zweiten Teilnehmer (BS) gerichtet wird, der sich zwischen Versorgungsbereichen von Mobilvermittlungsstellen (CSC1, CSC2) eines öffentlichen Mobilfunknetzes (PLMN) und Bereichen von Nebenstelleneinrichtungen (PBX1, PBX2) eines oder mehrerer privater Netze (PISN) bewegt und zumindest eine Funkteilnehmerstation (DMH) zum Empfangen und Senden der Anrufe benutzt,
- eine Verbindung zu einer ersten Nebenstelleneinrichtung (z.B. PBX1) des privaten Netzes (PISN) auf Grund der gewählten Rufnummer (PHN) aufgebaut und eine Mobilteilnehmerrufnummer (MSISDN) von der Nebenstelleneinrichtung (z.B. PBX1) zum öffentlichen Mobilfunknetz (PLMN) übertragen wird,
**dadurch gekennzeichnet,**
- **dass** im öffentlichen Mobilfunknetz (PLMN) zumindest eine Identifikationsnummer (PIID) zur Kennzeichnung des privaten Netzes (PISN) für den Zugriff zu der ersten Nebenstelleneinrichtung (z.B. PBX1) gespeichert wird,
- **dass** im öffentlichen Mobilfunknetz (PLMN) eine Leitwegnummer (PIRN) auf Grund der eintreffenden Mobilteilnehmerrufnummer (MSISDN) bereitgestellt und in Bezug auf die gespeicherte Identifikationsnummer (PIID) überprüft wird, ob das Anrufziel im Bereich einer Nebenstelleneinrichtung (z.B. PBX2) desselben privaten Netzes (PISN) liegt, zu dem die erste Nebenstelleneinrichtung (z.B. PBX1) gehört, und bei dem
- im öffentlichen Mobilfunknetz (PLMN) der Anruf bei Identität des privaten Netzes (PISN) für die erste Nebenstelleneinrichtung (z.B. PBX1) und für die Nebenstelleneinrichtung (z.B. PBX2) des Anrufziels ausgelöst und Leitweginformationen (RIN), die das Anrufziel festlegen, zur ersten Nebenstelleneinrichtung (PBX1) des privaten Netzes (PISN) gesendet werden, anhand deret die Verbindung zum Anrufziel im privaten Netz (PISN) aufgebaut wird.

2. Verfahren nach Anspruch 1,
**dadurch gekennzeichnet,**
**daß** die Leitwegnummer (PIRN) zumindestens eine Identifikationsnummer (PIID) zur Kennzeichnung des privaten Netzes (PISN), in dem die Nebenstelleneinrichtung (PBX2) des Anrufziels liegt, aufweist.

3. Verfahren nach Anspruch 2,
**dadurch gekennzeichnet,**
**daß** die Leitwegnummer (PIRN) zusätzlich eine Identifikationsnummer (PI2D) zur Kennzeichnung der Nebenstelleneinrichtung (PBX2) des Anrufziels und eine Identifikationsnummer (POID) zur Kennzeichnung des Anschlußports der Nebenstelleneinrichtung (PBX2) aufweist.

4. Verfahren nach einem der vorhergehenden Ansprüche,
**dadurch gekennzeichnet,**
**daß** die Leitweginformationen (RIN) eine Identifikationsnummer (P2ID) zur Kennzeichnung der Nebenstelleneinrichtung (PBX2) des Anrufziels und eine Identifikationsnummer (POID) zur Kennzeichnung des Anschlußports der Nebenstelleneinrichtung (PBX2) des Anrufziels aufweisen.

5. Verfahren nach einem der Ansprüche 1 bis 4,
**dadurch gekennzeichnet,**
**daß** für den angerufenen Teilnehmer (BS) eine Aufenthaltsinformation (LI), die angibt, wie der Teilnehmer (BS) im Bereich einer Nebenstelleneinrichtung (PBX2) des privaten Netzes (PISN) erreichbar ist, im öffentlichen Mobilfunknetz (PLMN) gespeichert und als Leitwegnummer (PIRN) für einen Vergleich mit der gespeicherten Identifikationsnummer (PIID) hinsichtlich Identität des privaten Netzes (PISN) für die erste Nebenstelleneinrichtung (PBX1) und für die den angerufenen Teilnehmer (BS) registrierende Nebenstelleneinrichtung (PBX2) verwendet wird.

6. Verfahren nach einem der Ansprüche 1 bis 4,
**dadurch gekennzeichnet,**
**daß** auf Grund einer Anrufumlenkung, die jeweils für den angerufenen Teilnehmer (BS) eingestellt ist und ein Anrufziel im privaten Netz (PISN) festlegt, die Leitwegnummer (PIRN) für einen Vergleich mit der gespeicherten Identifikationsnummer (PIID) hinsichtlich Identität des privaten Netzes (PISN) für die erste Nebenstelleneinrichtung (PBX1) und für die Nebenstelleneinrichtung (PBX2) des Anrufziels verwendet wird.

7. Verfahren nach Anspruch 6,
**dadurch gekennzeichnet,**
**daß** auf Grund einer unbedingten Anrufumlenkung, die eine sofortige Umlenkung des Anrufs bewirkt, oder einer Anrufumlenkung bei nicht erreichbarem Teilnehmer (BS) die Leitwegnummer (PIRN) für den Vergleich mit der Identifikationsnummer (PIID) verwendet wird.

8. Verfahren nach einem der vorhergehenden Ansprüche,
**dadurch gekennzeichnet,**
**daß** von einer den Zugriff zur ersten Nebenstelleneinrichtung (PBX1) registrierenden Mobilvermittlungsstelle (CSC1) die Überprüfung hinsichtlich Identität des privaten Netzes (PISN) für die erste Nebenstelleneinrichtung (PBX1) und für die Nebenstelleneinrichtung (PBX2) des Anrufziels durchgeführt und bei Identität die Leitweginformationen (RIN) zur ersten Nebenstelleneinrichtung (PBX1) ausgesendet werden.

9. Verfahren nach einem der Ansprüche 1 bis 7,
**dadurch gekennzeichnet,**
**daß** von einer Dienstesteuerungseinheit(SCP) eines Intelligenten Netzes, die in das öffentliche Mobilfunknetz (PLMN) durch Anschaltung an zumindestens eine Mobilvermittlungsstelle (z.B. CSC1) eingebunden ist, die Überprüfung hinsichtlich Identität des privaten Netzes (PISN) für die erste Nebenstelleneinrichtung (PBX1) und für die Nebenstelleneinrichtung (PBX2) des Anrufziels durchgeführt und bei Identität einer den Zugriff zur ersten Nebenstelleneinrichtung (PBX1) registrierenden Mobilvermittlungsstelle (CSC1) mitgeteilt wird, die Leitweginformationen (RIN) zur Nebenstelleneinrichtung (PBX1) auszusenden.

10. Verfahren nach Anspruch 9,
**dadurch gekennzeichnet,**
**daß** für jedes private Netz (PISN) von der Dienstesteuerungseinheit(SCP) jeweils einer Identifikationsnummer zur Kennzeichnung der Nebenstelleneinrichtung (PIID) eine Identifikationsnummer (PIID) zur Kennzeichnung des jeweiligen privaten Netzes zugeordnet wird.

11. Verfahren nach Anspruch 10,
**dadurch gekennzeichnet,**
**daß** die Identifikationsnummern (z.B. P1ID) zur Kennzeichnung der Nebenstelleneinrichtungen aus dem Nummernbereich der im öffentlichen Mobilfunknetz vergebbaren Mobilteilnehmerrufnummern entnommen werden.

12. Verfahren nach einem der vorhergehenden Ansprüche,
**dadurch gekennzeichnet,**
**daß** von dem angerufenen Teilnehmer (BS) für seine Mobilität eine kombinierte Funkteilnehmerstation (DMH) verwendet wird, durch die der Teilnehmer in den Versorgungsbereichen der Mobilvermittlungsstellen (CSC1, CSC2) des öffentlichen Mobilfunknetzes (PLMN) und in den Bereichen der Nebenstelleneinrichtungen (PBX1, PBX2) des privaten Netzes (PSIN) automatisch eingebucht wird.

13. System zur Leitweglenkung beim Verbindungsaufbau für Anrufe zwischen einem ersten Teilnehmer (AS) und einem zweiten Teilnehmer (BS), bei dem der Anruf vom ersten Teilnehmer (AS) durch Wahl einer Rufnummer initiiert und an den zweiten Teilnehmer (BS) gerichtet wird, der sich zwischen Versorgungsbereichen von Mobilvermittlungsstellen (CSC1, CSC2) eines öffentlichen Mobilfunknetzes (PLMN) und Bereichen von Nebenstelleneinrichtungen (PBX1, PBX2) eines oder mehrerer privater Netze (PISN) bewegt und zumindestens eine Funkteilnehmerstation (DMH) zum Empfangen und Senden der Anrufe benutzt, mit
- Mittel im privaten Netz (PISN) zum Aufbau einer Verbindung zu einer ersten Nebenstelleneinrichtung (z.B. PBX1) auf Grund der gewählten Rufnummer und zum Senden einer Mobilteilnehmerrufnummer (MSISDN) von der Nebenstelleneinrichtung (PBX1) zum öffentlichen Mobilfunknetz (PLMN),
**gekennzeichnet durch**
- Mittel (z.B. CSC1) im öffentlichen Mobilfunknetz (PLMN) zur Speicherung zumindestens einer Identifikationsnummer (PIID), **durch** die das private Netz (PISN) **gekennzeichnet** ist, für den Zugriff zu der Nebenstelleneinrichtung (z.B. PBX1) des privaten Netzes (PISN)
- Mittel (z.B. VLR2, HLR) im öffentlichen Mobilfunknetz (PLMN) zur Bereitstellung einer Leitwegnummer (PIRN) auf Grund der eintreffenden Mobilteilnehmerrufnummer (MSISDN) und Mittel (z.B. CSC1, SCP) zur Überprüfung der Leitwegnummer (PIRN) in Bezug auf die gespeicherte Identifikationsnummer (PIID), ob das Anrufziel im Bereich einer Nebenstelleneinrichtung (z.B. PBX2) desselben privaten Netzes (PISN) liegt, zu dem die erste Nebenstelleneinrichtung (PBX1) gehört,
- Mittel (z.B. CSC1) im öffentlichen Mobilfunknetz (PLMN) zum Auslösen des Anrufs bei Identität des privaten Netzes (PISN) für die erste Nebenstelleneinrichtung (PBX1) und für die Nebenstelleneinrichtung (z.B. PBX2) des Anrufziels sowie zum Aussenden von Leitweginformationen (RIN), die das Anrufziel festlegen, zur ersten Nebenstelleneinrichtung (z.B. PBX1) des privaten Netzes (PISN), die die Verbindung zum Anrufziel anhand der Leitweginformationen (RIN) im privaten Netz (PISN) aufbaut.

14. System nach Anspruch 13,
**dadurch gekennzeichnet,**
**daß** eine Zugriffe zur ersten Nebenstelleneinrichtung (z.B. PBX1) registrierende Mobilvermittlungsstelle (CSC1) im öffentlichen Mobilfunknetz (PLMN) zur Überprüfung der Identität des privaten Netzes (PISN) durch Vergleich der Leitwegnummer (PIRN) mit der Identifikationsnummer (PIID) vorgesehen ist.

15. System nach Anspruch 13,
**dadurch gekennzeichnet,**
**daß** zur Überprüfung der Identität des privaten Netzes (PISN) durch Vergleich der Leitwegnummer (PIRN) mit der Identifikationsnummer (PIID) eine Dienstesteuerungseinheit(SCP) eines Intelligenten Netzes vorgesehen ist, die jeweils in das öffentliche Mobilfunknetz (PLMN) durch Anschaltung an zumindestens eine Mobilvermittlungsstelle (z.B. CSC1) eingebunden ist und bei Identität einer den Zugriff zur ersten Nebenstelleneinrichtung (PBX1) registrierenden Mobilvermittlungsstelle (CSC1) mitteilt, die Leitweginformationen (RIN) zur Nebenstelleneinrichtung (PBX1) auszusenden.

## Claims

1. Method for routing when setting up a connection for calls between a first subscriber (AS) and a second subscriber (BS), in which
- the call is initiated by the first subscriber (AS) by dialling a call number (PHN) and is passed to the second subscriber (BS) who is moving between supply areas and mobile switching centres (CSC1, CSC2) in a public mobile radio network (PLMN) and areas of private branch exchanges (PBX1, PBX2) in one or more private networks (PISN), and is using at least one radio subscriber station (DMH) for receiving and transmitting the calls,
- a connection to a first private branch exchange (for example PBX1) in the private network (PISN) is set up on the basis of the dialled call number (PHN), and a mobile subscriber call number (MSISDN) is transmitted from the private branch exchange (for example PBX1) to the public mobile radio network (PLMN),
**characterized**
- **in that** at least one identification number (PIID) for identification of the private network (PISN) for access to the first private branch exchange (for example PBX1) is stored in the public mobile radio network (PLMN),
- **in that** a routing number (PIRN) is produced in the public mobile radio network (PLMN) on the basis of the arrival of the mobile subscriber call number (MSISDN) and is checked against the stored identification number (PIID) to determine whether the call destination is located in the area of a private branch exchange (for example PBX2) in the same private network (PISN) to which the first private branch exchange (for example PBX1) belongs, and in which
- if the private network (PISN) for the first private branch exchange (for example PBX1) is the same as that for the private branch exchange (PBX2) for the call destination, the call is initiated in the public mobile radio network (PLMN) and routing information (RIN) which defines the call destination is sent to the first private branch exchange (PBX1) in the private network (PISN), on the basis of which the connection is set up to the call destination in the private network (PISN).

2. Method according to Claim 1,
**characterized**
**in that** the routing number (PIRN) has at least one identification number (PIID) for identification of the private network (PISN) in which the private branch exchange (PBX2) of the call destination is located.

3. Method according to Claim 2,
**characterized**
**in that** the routing number (PIRN) also has an identification number (PI2D) for identification of the private branch exchange (PBX2) of the call destination, and an identification number (POID) for identification of the connection port of the private branch exchange (PBX2).

4. Method according to one of the preceding claims,
**characterized**
**in that** the routing information (RIN) has an identification number (P2ID) for identification of the private branch exchange (PBX2) of the call destination, and has an identification number (POID) for identification of the connection port of the private branch exchange (PBX2) of the call destination.

5. Method according to one of Claims 1 to 4,
**characterized**
**in that** location information (LI) for the called subscriber (BS) indicating how the subscriber (BS) can be reached in the area of the private branch exchange (PBX2) in the private network (PISN) is stored in the public mobile radio network (PLMN), and is used as the routing number (PIRN) for comparison with the stored identification number (PIID) in order to determine whether the private network (PISN) for the first private branch exchange (PBX1) is the same as that for the private branch exchange (PBX2) registering the called subscriber (BS).

6. Method according to one of Claims 1 to 4,
**characterized**
**in that**, on the basis of a call diversion which is in each case set for the called subscriber (BS) and defines a call destination in the private network (PISN), the routing number (PIRN) is used for comparison with the stored identification number (PIID) to determine whether the private network (PISN) for the first private branch exchange (PBX1) is the same as that for the private branch exchange (PBX2) for the call destination.

7. Method according to Claim 6
**characterized**
**in that**, on the basis of an unconditional call diversion which results in immediate diversion of the call, or of a call diversion when the subscriber (BS) cannot be reached, the routing number (PIRN) is used for the comparison with the identification number (PIID).

8. Method according to one of the preceding claims,
**characterized**
**in that**, the check to determine whether the private network (PISN) for the first private branch exchange (PBX1) is the same as that for the private branch exchange (PBX2) of the call destination is carried out by a mobile switching centre (CSC1) which registers the access to the first private branch exchange (PBX1) and, if they are the same, the routing information (RIN) is sent to the first private branch exchange (PBX1).

9. Method according to one of Claims 1 to 7,
**characterized**
**in that**, the check to determine whether the private network (PISN) for the first private branch exchange (PBX1) is the same as that for the private branch exchange (PBX2) for the call destination is carried out by a service control point (SCP) in an intelligent network which is included in the public mobile radio network (PLMN) by connection to at least one mobile switching centre (for example CSC1), and, if they are the same, this is reported to a mobile switching centre (CSC1) which registers the access to the first private branch exchange (PBX1) in order to send the routing information (RIN) to the private branch exchange (PBX1).

10. Method according to Claim 9,
**characterized**
**in that**, for each private network (PISN), the service control point (SCP) in each case associates an identification number (PIID) for identification of the respective private network with an identification number for identification for the private branch exchange (P1ID).

11. Method according to Claim 10,
**characterized**
**in that** the identification numbers (for example P1ID) for identification of the private branch exchanges are taken from the number range of the mobile subscriber call numbers which can be allocated in the public mobile radio network.

12. Method according to one of the preceding claims,
**characterized**
**in that** the called subscriber (BS) uses a combined radio subscriber station (DMH) for his mobility, by means of which combined radio subscriber station (DMH) the subscriber automatically registers in the supply areas of the mobile switching centres (CSC1, CSC2) in the public mobile radio network (PLMN) and in the areas of the private branch exchanges (PBX1, PBX2) in the private network (PSIN).

13. System for routing when setting up a connection for calls between a first subscriber (AS) and a second subscriber (BS), in which the call is initiated by the first subscriber (AS) by dialling a call number and is passed to the second subscriber (BS) who is moving between supply areas of mobile switching centres (CSC1, CSC2) in a public mobile radio network (PLMN) and areas of private branch exchanges (PBX1, PBX2) in one or more private networks (PISN), and is using at least one radio subscriber station (DMH) for receiving and transmitting the calls, having
- means in the private network (PISN) for setting up a connection for a first private branch exchange (for example PBX1) on the basis of the dialled call number and for sending a mobile subscriber call number (MSISDN) from the private branch exchange (PBX1) to the public mobile radio network (PLMN),
**characterized by**,
- means (for example CSC1) in the public mobile radio network (PLMN) for storing at least one identification number (PIID) which identifies the private network (PISN), for access to the private branch exchange (for example PBX1) in the private network (PISN),
- means (for example VLR2, HLR) in the public mobile radio network (PLMN) for providing a routing number (PIRN) on the basis of the arrival of the mobile subscriber call number (MSISDN), and means (for example CSC1, SCP) for checking the routing number (PIRN) against the stored identification number (PIID) to determine whether the call destination is located in the area of a private branch exchange (for example PBX2) in the same private network (PISN) to which the first private branch exchange (for example PBX1) belongs,
- means (for example CSC1) in the public mobile radio network (PLMN) for initiating the call if the private network (PISN) for the first private branch exchange (PBX1) is the same as that for the private branch exchange (for example PBX2) for the call destination, and for sending routing information (RIN) which defines the call destination, to the first private branch exchange (for example PBX1) in the private network (PISN), which sets up the connection to the call destination on the basis of the routing information (RIN) in the private network (PISN).

14. System according to Claim 13,
**characterized**
**in that** a mobile switching centre (CSC1) which registers access to the first private branch exchange (for example PBX1) is provided in the public mobile radio network (PLMN) in order to check the identity of the private network (PISN) by comparison of the routing number (PIRN) with the identification number (PIID).

15. System according to Claim 13,
**characterized**
**in that** a service control point (SCP) is provided in an intelligent network in order to check the identity of the private network (PISN) by comparison of the routing number (PIRN) with the identification number (PIID), and is in each case included in the public mobile radio network (PLMN) by connection to at least one mobile switching centre (for example CSC1) and, if they are the same, report this to a mobile switching centre (CSC1) which registers the access to the first private branch exchange (PBX1) in order to send the routing information (RIN) to the private branch exchange (PBX1).

## Revendications

1. Procédé d'acheminement lors de l'établissement d'une liaison pour appels entre un premier abonné (AS) et un deuxième abonné (BS), dans lequel
- l'appel du premier abonné (AS) est initialisé par la sélection d'un numéro d'appel (PHN) et dirigé vers le deuxième abonné (BS) qui se déplace entre des zones de desserte de centres de commutation mobiles (CSC1, CSC2) d'un réseau radio mobile public (PLMN) et des zones de commutateurs privés (PBX1, PBX2) d'un ou de plusieurs réseaux privés (PISN) et utilise au moins une station d'abonné radio (DMH) pour l'émission et la réception des appels,
- une liaison est établie vers un premier commutateur privé (PBX1, par exemple) du réseau privé (PISN) sur la base du numéro d'appel sélectionné (PHN) et dans lequel un numéro d'appel d'abonné mobile (MSISDN) est transmis du commutateur privé (PBX1, par exemple) vers le réseau radio mobile public (PLMN),
**caractérisé en ce que**
- au moins un numéro d'identification (PIID) pour identifier le réseau privé (PISN) est enregistré dans le réseau radio mobile (PLMN) pour l'accès au premier commutateur privé (PBX1, par exemple);
- un numéro d'acheminement (PIRN) est mis à disposition dans le réseau radio mobile public (PLMN) sur la base du numéro d'appel d'abonné mobile entrant (MSISDN) et **en ce qu'**il est contrôlé, en rapport avec le numéro d'identification (PIID) enregistré, si la cible de l'appel se trouve dans la zone d'un commutateur privé (PBX2, par exemple) du même réseau privé (PISN) que celui dont le premier commutateur privé (PBX1, par exemple) fait partie, et dans lequel
- l'appel est déclenché dans le réseau radio mobile public (PLMN) si le réseau privé (PISN) est identique pour le premier commutateur privé (PBX1, par exemple) et le commutateur privé (PBX2, par exemple) de la cible de l'appel et des informations d'acheminement (RIN) qui déterminent la cible de l'appel sont émises vers le premier commutateur privé (PBX1) du réseau privé (PISN), à l'aide desquelles est établie la liaison vers la cible de l'appel dans le réseau privé (PISN).

2. Procédé selon la revendication 1, **caractérisé en ce que** le numéro d'acheminement (PIRN) fait état d'au moins un numéro d'identification (PIID) pour identifier le réseau privé (PISN) dans lequel se trouve le commutateur privé (PBX2) de la cible de l'appel.

3. Procédé selon la revendication 2, **caractérisé en ce que** le numéro d'acheminement (PIRN) fait état, additionnellement, d'un numéro d'identification (PI2D) pour identifier le commutateur privé (PBX2) de la cible de l'appel et d'un numéro d'identification (POID) pour identifier le port de connexion dudit commutateur privé (PBX2).

4. Procédé selon l'une des revendications précédentes, **caractérisé en ce que** les informations d'acheminement (RIN) contiennent un numéro d'identification (P2ID) pour identifier le commutateur privé (PBX2) de la cible de l'appel et un numéro d'identification (POID) pour identifier le port de connexion dudit commutateur privé (PBX2) de la cible de l'appel.

5. Procédé selon l'une des revendications 1 à 4, **caractérisé en ce que**, pour l'abonné appelé (BS), une information de localisation (LI) indiquant comment joindre l'abonné (BS) dans la zone d'un commutateur privé (PBX2) du réseau privé (PISN) est enregistrée dans le réseau radio mobile public (POMN) et est utilisée en tant que numéro d'acheminement (PIRN) aux fins d'une comparaison avec le numéro d'identification (PIID) enregistré pour établir si le réseau privé (PISN) est identique pour le premier commutateur privé (PBX1) et pour le commutateur privé (PBX2) enregistrant l'abonné appelé (BS).

6. Procédé selon l'une des revendications 1 à 4, **caractérisé en ce que**, sur la base d'une déviation d'appel définie pour chaque abonné appelé (BS) et déterminant une cible d'appel dans le réseau privé (PISN), le numéro d'acheminement (PIRN) est utilisé aux fins d'une comparaison avec le numéro d'identification (PIID) enregistré pour établir si le réseau privé (PISN) est identique pour le premier commutateur privé (PBX1) et pour le commutateur privé (PBX2) de la cible de l'appel.

7. Procédé selon la revendication 6, **caractérisé en ce que**, sur la base d'une déviation d'appel inconditionnelle provoquant une déviation immédiate de l'appel, ou d'une déviation de l'appel si l'abonné (BS) n'est pas joignable, le numéro d'acheminement (PIRN) est utilisé aux fins de la comparaison avec le numéro d'identification (PIID).

8. Procédé selon l'une des revendications précédentes, **caractérisé en ce que** le contrôle de l'identité du réseau privé (PISN) pour le premier commutateur privé (PBX1) et pour le commutateur privé (PBX2) de la cible de l'appel est effectué par un centre de commutation mobile (CSC1) enregistrant l'accès au premier commutateur privé (PBX1) et **en ce qu'**en cas d'identité les informations d'acheminement (RIN) sont émises vers le premier commutateur privé (PBX1).

9. Procédé selon l'une des revendications 1 à 7, **caractérisé en ce que** le contrôle de l'identité du réseau privé (PISN) pour le premier commutateur privé (PBX1) et pour le commutateur privé (PBX2) de la cible de l'appel est effectué par un point de contrôle de service (SCP) d'un réseau intelligent intégré dans le réseau radio mobile public (PLMN) par connexion à au moins un centre de commutation mobile (CSC1, par exemple) et **en ce qu'**en cas d'identité un centre de commutation mobile (CSC1) enregistrant l'accès au premier commutateur privé (PBX1) reçoit l'information d'émettre les informations d'acheminement (RIN) vers le commutateur privé (PBX1).

10. Procédé selon la revendication 9, **caractérisé en ce que**, pour chaque réseau privé (PISN), un numéro d'identification (PIID) pour identifier chaque réseau privé est associé par le point de contrôle de service (SCP) à un numéro d'identification pour identifier le commutateur privé (P1ID).

11. Procédé selon la revendication 10, **caractérisé en ce que** les numéros d'identification (P1ID, par exemple) pour identifier les commutateurs privés sont tirés de la zone de numéros des numéros d'appel d'abonnés mobiles attribuables dans le réseau radio mobile public.

12. Procédé selon l'une des revendications précédentes, **caractérisé en ce que** l'abonné (BS) appelé utilise, aux fins de sa mobilité, une station combinée d'abonné radio (DMH) lui permettant de s'enregistrer automatiquement dans les zones de desserte des centres de commutation mobiles (CSC1, CSC2) du réseau radio mobile public (PLMN) et dans les zones des commutateurs d'abonné (PBX1, PBX2) du réseau privé (PSIN).

13. Système d'acheminement lors de l'établissement d'une liaison pour appels entre un premier abonné (AS) et un deuxième abonné (BS), dans lequel l'appel du premier abonné (AS) est initialisé par la sélection d'un numéro d'appel et dirigé vers le deuxième abonné (BS) qui se déplace entre des zones de desserte de centres de commutation mobiles (CSC1, CSC2) d'un réseau radio mobile public (PLMN) et des zones de commutateurs privés (PBX1, PBX2) d'un ou de plusieurs réseaux privés (PISN) et utilise au moins une station d'abonné radio (DMH) pour l'émission et la réception des appels, avec
- des moyens, dans le réseau privé (PISN), pour établir une liaison vers un premier commutateur privé (PBX1, par exemple) sur la base du numéro d'appel sélectionné et pour envoyer un numéro d'appel d'abonné mobile (MSISDN) du commutateur privé (PBX1, par exemple) vers le réseau radio mobile public (PLMN),
**caractérisé par**
- des moyens (CSC1, par exemple), dans le réseau radio mobile public (PLMN), pour enregistrer au moins un numéro d'identification (PIID) caractérisant le réseau privé (PISN) pour l'accès au commutateur privé (PBX1, par exemple) du réseau privé (PISN);
- des moyens (VLR2, HLR, par exemple), dans le réseau radio mobile public (PLMN), pour mettre à disposition un numéro d'acheminement (PIRN) sur la base du numéro d'appel d'abonné mobile entrant (MSISDN) et des moyens (CSC1, SCP, par exemple) pour contrôler le numéro d'acheminement (PIRN) en rapport avec le numéro d'identification (PIID) enregistré pour établir si la cible de l'appel se trouve dans la zone d'un commutateur privé (PBX2, par exemple) du même réseau privé (PISN) que celui dont le premier commutateur privé (PBX1, par exemple) fait partie;
- des moyens (CSC1, par exemple), dans le réseau radio mobile public (PLMN), pour déclencher l'appel si le réseau privé (PISN) est identique pour le premier commutateur privé (PBX1) et le commutateur privé (PBX2, par exemple) de la cible de l'appel ainsi que pour émettre des informations d'acheminement (RIN), qui déterminent la cible de l'appel, vers le premier commutateur privé (PBX1, par exemple) du réseau privé (PISN) qui établit la liaison vers la cible de l'appel à l'aide des informations d'acheminement (RIN) dans le réseau privé (PISN).

14. Système selon la revendication 13, **caractérisé en ce qu'**un centre de commutation mobile (XSC1) enregistrant des accès à un premier commutateur privé (PBX1, par exemple) est prévu dans le réseau radio mobile public (PLMN) pour contrôler l'identité du réseau privé (PISN) par comparaison du numéro d'acheminement (PIRN) avec le numéro d'identification (PIID).

15. Système selon la revendication 13, **caractérisé en ce qu'**est prévu, aux fins du contrôle de l'identité du réseau privé (PISN) par comparaison du numéro d'acheminement (PIRN) avec le numéro d'identification (PIID), un point de contrôle de service (SCP) d'un réseau intelligent, lequel est intégré dans chaque cas dans le réseau radio mobile public (PLMN) par connexion à au moins un centre de commutation mobile (CSC1, par exemple) et, en cas d'identité, communique à un centre de commutation mobile (CSC1) enregistrant l'accès au premier commutateur privé (PBX1) qu'il faut émettre les informations d'acheminement (RIN) vers le commutateur privé (PBX1).
